# EUROPEAN PATENT APPLICATION

(11) **EP 4 498 567 A1**
(43) Date of publication of application: **29.01.2025**
(21) Application number: 24190012.5
(22) Date of filing: 22.07.2024
(51) Int. Cl.: H02J 7/00, H01M 10/42

(54) **ENERGY STORAGE SYSTEM**

(30) Priority: 28.07.2023 CN 202310944494
(71) Applicant: Huawei Digital Power Technologies Co., Ltd., Shenzhen, Guangdong 518043 (CN)
(72) Inventor: CHEN, Gongde, Shenzhen, 518043 (CN); CHEN, Baoguo, Shenzhen, 518043 (CN); HE, Ye, Shenzhen, 518043 (CN)
(74) Representative: Gill Jennings & Every LLP

(57) **Abstract**

An embodiment of this application discloses an energy storage system. The energy storage system includes an electrochemical cell pack, a startup circuit, and an auxiliary source circuit. The startup circuit includes a first control circuit and a second control circuit, the second control circuit includes a first voltage divider circuit and a second voltage divider circuit that are connected in series, the first voltage divider circuit includes a switching device and a voltage divider that are connected in series, and a connection point between the first voltage divider circuit and the second voltage divider circuit is connected to a first control end of the first control circuit. When the switching device is turned on, a voltage of the electrochemical cell pack needs to meet a specified condition, so that a turn-on voltage generated by the connection point between the first voltage divider circuit and the second voltage divider circuit is greater than a specified threshold voltage, and the first control circuit turns on a line between the electrochemical cell pack and the auxiliary source circuit, to enable the battery pack to supply power to the auxiliary source circuit. This ensures that power cannot be supplied to the auxiliary source circuit in a manner that the switching device is turned on when the voltage of the electrochemical cell pack is excessively low, and effectively prevents overdischarge of the electrochemical cell pack.

## Description

### TECHNICAL FIELD

This application relates to the field of battery technologies, and in particular, to an energy storage system.

### BACKGROUND

A lithium battery has features such as high energy density and a long cycle life, and is widely used in fields such as energy storage, electric vehicles, and backup power. A battery pack of a lithium battery in an energy storage system usually includes an electrochemical cell pack, a battery management system (battery management system, BMS), a mechanical part, a wiring harness, and other accessories. The BMS has functions such as power conversion, battery management, battery protection, and communication. The BMS produces specific power consumption in an operating process. When there is no external power supply, an electrochemical cell pack of the lithium battery usually supplies power to the BMS independently. Specifically, a startup circuit turns on an auxiliary source circuit and the electrochemical cell pack, and the auxiliary source circuit converts power obtained from the electrochemical cell pack into a voltage required by the BMS to supply power to the BMS. Currently, most of existing battery undervoltage protection is implemented by software. To be specific, when a startup is required, after a startup instruction is delivered to a startup circuit, the startup circuit turns on an auxiliary source circuit and an electrochemical cell pack, so that the auxiliary source circuit starts to operate and a battery voltage is sampled. If the battery voltage is lower than an undervoltage protection point, a shutdown instruction is delivered. If abuse occurs, a button fault, a signal fault, or the like causes a normally closed startup instruction, the battery pack repeatedly starts or continuously supplies power during use. This poses a risk that battery overdischarge causes permanent damage. In other words, when overdischarge of the battery pack causes undervoltage protection, repeated delivery of the startup instruction may cause irreversible damage to the electrochemical cell pack.

### SUMMARY

This application provides an energy storage system, to resolve a risk that a battery pack is damaged in a case of overdischarge.

According to a first aspect, this application provides an energy storage system that may specifically include an electrochemical cell pack, a startup circuit, and an auxiliary source circuit. The electrochemical cell pack usually includes several electrochemical cells connected in series or parallel, a busbar, a mechanical part, and an accessory. The startup circuit is connected between the electrochemical cell pack and the auxiliary source circuit, and the startup circuit is configured to control a connection status between the electrochemical cell pack and the auxiliary source circuit based on an external input signal. The auxiliary source circuit is configured to obtain power from the electrochemical cell pack and perform voltage conversion to supply power to a corresponding module. The auxiliary source circuit may alternatively obtain power from the outside of the energy storage system and perform voltage conversion to supply power to a corresponding module. An input of the startup circuit is connected to the electrochemical cell pack, an output of the startup circuit is connected to the auxiliary source circuit, and the startup circuit may include a first control circuit and a second control circuit. The first control circuit is connected between the input of the startup circuit and the output of the startup circuit. The second control circuit includes a first voltage divider circuit and a second voltage divider circuit that are connected in series, the first voltage divider circuit is connected to the input of the startup circuit, the first voltage divider circuit includes a switching device and a voltage divider that are connected in series, the second voltage divider circuit is grounded, and a connection point between the first voltage divider circuit and the second voltage divider circuit is connected to a first control end of the first control circuit. Between a ground cable and the input of the startup circuit, the second voltage divider circuit and the voltage divider are disposed in series. When the voltage divider is turned on, a voltage difference is generated at two ends, so that when the switching device is turned on, the connection point may generate a turn-on voltage that is lower than a battery voltage of the electrochemical cell pack. When the switching device is turned on, a turn-on voltage of the connection point between the first voltage divider circuit and the second voltage divider circuit is positively correlated with a battery voltage of the electrochemical cell pack. That is, a higher battery voltage indicates a higher turn-on voltage. The voltage difference generated by the voltage divider at the two ends of the voltage divider when the first voltage divider circuit is turned on may be adjusted. For ease of description, this may be briefly referred to as a turn-on voltage drop. In this way, when the turn-on voltage is greater than a specified threshold voltage, the battery voltage can meet a specified startup voltage, and the first control circuit turns on a line between the electrochemical cell pack and the auxiliary source circuit, so that the battery pack supplies power to the auxiliary source circuit, and the auxiliary source circuit starts to operate. The first control circuit may be a switch circuit formed through a combination of a switching transistor and another device, the specified threshold voltage is a voltage threshold that enables a switching transistor that is in the first control circuit and that is connected to the first control end to be turned on, and the specified startup voltage needs to be greater than or equal to a minimum voltage of the electrochemical cell pack in a case in which the energy storage system can start without relying on an external power supply.

In this embodiment of this application, the voltage divider is disposed in the first voltage divider circuit of the startup circuit. When the switching device in the first voltage divider circuit is turned on after receiving a startup instruction (that is, an externally input activation signal), if the battery voltage reaches the specified startup voltage, the turn-on voltage of the connection point between the first voltage divider circuit and the second voltage divider circuit is set to be greater than the specified threshold voltage. In this way, the first control circuit turns on the line between the electrochemical cell pack and the auxiliary source circuit, the battery pack supplies power to the auxiliary source circuit, and the auxiliary source circuit can start to operate. When the switching device in the first voltage divider circuit is turned on after receiving the activation signal, if the battery voltage is lower than the specified startup voltage, the turn-on voltage of the connection point between the first voltage divider circuit and the second voltage divider circuit is set to be lower than the specified threshold voltage. In this way, the first control circuit maintains a disconnected state of the line between the electrochemical cell pack and the auxiliary source circuit, and power cannot be supplied to the auxiliary source circuit by using the electrochemical cell pack. That is, the startup circuit automatically performs undervoltage protection. This effectively prevents overdischarge of the electrochemical cell pack, and prevents a risk that the battery pack is damaged in a case of overdischarge when the battery pack consumes extra power after repeatedly receiving the startup instruction during undervoltage.

In some embodiments of this application, the first voltage divider circuit may include a plurality of voltage divider branches that are connected in parallel, each of the plurality of voltage divider branches includes one switching device, and at least some of the voltage divider branches include a first voltage divider that is connected in series to the switching device. In a voltage divider branch, locations of the switching device and the first voltage divider may be interchanged. After receiving the startup instruction, any one of the switching devices in the voltage divider branches may enable the connection point to generate a corresponding turn-on voltage. When the turn-on voltage is greater than the specified threshold voltage, the first control circuit turns on a line between the input of the startup circuit and the output of the startup circuit, so that the battery pack supplies power to the auxiliary source circuit, and the auxiliary source circuit starts to operate.

In some embodiments of this application, for the first voltage dividers included in different voltage divider branches, when the voltage divider branches are turned on, voltage differences generated at two ends of the first voltage dividers are different, to adapt to different startup voltages. That is, for different startup modes, a corresponding minimum startup voltage may be set to implement different undervoltage protection levels.

In some other embodiments of this application, the first voltage divider circuit may further include a voltage divider branch in which only a switching device is disposed and no voltage divider is disposed.

In some embodiments of this application, the first voltage divider circuit may further include a second voltage divider that is connected in series to the plurality of voltage divider branches. The second voltage divider may form a series connection relationship with the first voltage divider in each voltage divider branch. In this way, it may be considered that the plurality of voltage divider branches share the second voltage divider for voltage division. This can reduce a quantity of voltage dividers and save costs. There may be one or more second voltage dividers. In addition, the second voltage divider may be disposed between the plurality of voltage divider branches and the connection point, or the second voltage divider may be disposed between the plurality of voltage divider branches and the input of the startup circuit.

In some embodiments of this application, the switching device may be any one of a switching transistor, a mechanical switch (for example, a physical button), a relay, or an opto-isolator.

In some embodiments of this application, the voltage divider may be a device that can generate a turn-on voltage drop, for example, a resistor, a digital potentiometer, a voltage regulator tube, or a diode. The second voltage divider circuit may be specifically a device that can generate a turn-on voltage drop, for example, a resistor, a digital potentiometer, a voltage regulator tube, or a diode.

In some embodiments of this application, the input of the startup circuit includes a positive input and a negative input, the negative input is usually grounded, and the output of the startup circuit includes a positive output and a negative output.

The negative output may be directly connected to the negative input, and the first control circuit is connected between the positive output and the positive input. In other words, the first control circuit may be disposed on a side of the positive input, and the first control circuit controls a connection status of a line between the positive input and the positive output. Alternatively, the positive output may be directly connected to the positive input, and the first control circuit may be connected between the negative output and the negative input. In other words, the first control circuit may be disposed on a side of the negative input, and the first control circuit controls a connection status of a line between the negative input and the negative output.

In some embodiments of this application, the first control circuit may specifically include: a first switching transistor, a second switching transistor, and a first resistor. A control electrode of the first switching transistor is connected to the connection point between the first voltage divider circuit and the second voltage divider circuit, a first electrode of the first switching transistor is connected to the negative input, a second electrode of the first switching transistor is connected in series to the first resistor and is connected to a control electrode of the second switching transistor, a first electrode of the second switching transistor is connected to the positive input, and a second electrode of the second switching transistor is connected to the positive output. When the battery voltage meets the specified startup voltage, the turn-on voltage generated at the connection point is greater than the specified threshold voltage, so that the first electrode and the second electrode of the first switching transistor are turned on. A ground voltage of the negative input is transmitted to the control electrode of the second switching transistor after voltage division through the first resistor, so that the first electrode and the second electrode of the second switching transistor are turned on. In this way, after the line between the input of the startup circuit and the output of the startup circuit is turned on, the battery pack supplies power to the auxiliary source circuit, and the auxiliary source circuit starts to operate.

In some embodiments of this application, the first control circuit may further include a third switching transistor. A first electrode of the third switching transistor is connected to the negative input, a second electrode of the third switching transistor is connected to the second electrode of the first switching transistor, and a control electrode of the third switching transistor is configured to receive a maintenance signal. The maintenance signal may be output by a control chip after the first control circuit turns on the line between the input of the startup circuit and the output of the startup circuit. The third switching transistor is turned on under control of the maintenance signal, so that the ground voltage of the negative input is transmitted to the control electrode of the second switching transistor after voltage division through the first resistor. The second switching transistor is maintained in a turn-on state, to continuously turn on the line between the input of the startup circuit and the output of the startup circuit and enable the battery pack to continuously supply power to the auxiliary source circuit.

In this embodiment of this application, the switching transistor may be a metal oxide semiconductor field effect transistor (metal oxide semiconductor field effect transistor, MOSFET), the switching transistor may be an insulated gate bipolar transistor (insulated gate bipolar transistor, IGBT) or a bipolar junction transistor (bipolar junction transistor, BJT), or the switching transistor may be one or more of a plurality of types of transistor devices such as a gallium nitride (GaN) field effect transistor and a silicon carbide (SiC) power transistor. Details are not listed in this embodiment of this application.

In some embodiments of this application, the energy storage system may usually further include modules such as a battery management system and a power conversion circuit. The battery management system may include the startup circuit and the auxiliary source circuit. The power conversion circuit is connected to each of the auxiliary source circuit and the electrochemical cell pack. The power conversion circuit is configured to perform power conversion on electric energy stored in the electrochemical cell pack and then output the electric energy or perform power conversion on external electric energy and then charge the electric energy to the electrochemical cell pack. The auxiliary source circuit is configured to provide required electric energy for the power conversion circuit. The battery management system BMS may further include a module such as a communication module and the auxiliary source circuit may further provide required electric energy for the module such as the communication module.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a structure of an energy storage system according to an embodiment of this application;
FIG. 2 is a diagram of another structure of an energy storage system according to an embodiment of this application;
FIG. 3 is a diagram of another structure of an energy storage system according to an embodiment of this application;
FIG. 4 is a schematic of a structure of a startup circuit in an energy storage system according to an embodiment of this application;
FIG. 5 is a schematic of another structure of a startup circuit in an energy storage system according to an embodiment of this application;
FIG. 6 is a schematic of another structure of a startup circuit in an energy storage system according to an embodiment of this application;
FIG. 7 is a schematic of another structure of a startup circuit in an energy storage system according to an embodiment of this application; and
FIG. 8 is a schematic of a specific circuit structure of a startup circuit in an energy storage system according to an embodiment of this application.

### Reference numerals:

1: electrochemical cell pack; 2: startup circuit; 3: auxiliary source circuit; 4: power conversion circuit; 21: input; 22: output; 23: first control circuit; 24: second control circuit; 241: first voltage divider circuit; 242: second voltage divider circuit; 241a, 241b, 241n: voltage divider branch; K, K1, K2, K3, Kn: switching device; A: voltage divider; A1, A2: first voltage divider; A0: second voltage divider; P: connection point; G1: first control end; G2: second control end.

### DESCRIPTION OF EMBODIMENTS

To make objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include a form such as "one or more", unless otherwise specified in the context clearly.

Reference to " an embodiment", "some embodiments", or the like described in this specification indicates that one or more embodiments of this application include a specific feature, structure, or characteristic described with reference to this embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

In addition, same reference numerals in the figures represent same or similar structures. Therefore, repeated description thereof is omitted. Words for expressing positions and directions in this application are described by using the accompanying drawings as examples. However, changes may be made as required, and all changes shall fall within the protection scope of this application. The accompanying drawings in this application are merely used to show a relative positional relationship, and do not represent a true scale.

The following describes in detail an energy storage system provided in this application with reference to the accompanying drawings.

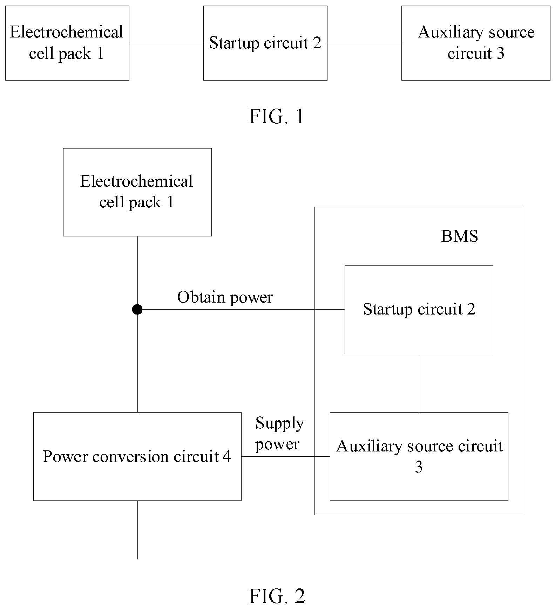

FIG. 1 is a diagram of a structure of an energy storage system according to an embodiment of this application. FIG. 2 is a diagram of another structure of an energy storage system according to an embodiment of this application.

Refer to FIG. 1. The energy storage system provided in an embodiment of this application may specifically include: an electrochemical cell pack 1, a startup circuit 2, and an auxiliary source circuit 3. The electrochemical cell pack 1 usually includes several electrochemical cells connected in series or parallel, a busbar, a mechanical part, and an accessory. The startup circuit 2 is connected between the electrochemical cell pack 1 and the auxiliary source circuit 3, and the startup circuit 2 is configured to control a connection status between the electrochemical cell pack 1 and the auxiliary source circuit 3 based on an external input signal. The auxiliary source circuit 3 is configured to obtain power from the electrochemical cell pack 1 and perform voltage conversion to supply power to a corresponding module. The auxiliary source circuit 3 may alternatively obtain power from the outside of the energy storage system and perform voltage conversion to supply power to a corresponding module. Refer to FIG. 2. The energy storage system may usually further include a battery management system BMS and a power conversion circuit 4. The battery management system BMS may include modules such as the startup circuit 2 and the auxiliary source circuit 3. The power conversion circuit 4 is connected to each of the auxiliary source circuit 3 and the electrochemical cell pack 1. The power conversion circuit 4 is configured to perform power conversion on electric energy stored in the electrochemical cell pack 1 and then output the electric energy or perform power conversion on external electric energy and then charge the electric energy to the electrochemical cell pack 1. The auxiliary source circuit 3 is configured to provide required electric energy for the power conversion circuit 4. The battery management system BMS may further include a module such as a communication module, and the auxiliary source circuit 3 may further provide required electric energy for the communication module. Details are not described herein. The energy storage system provided in embodiments of this application may be used in a home energy storage system, or may be used in a residential energy storage system. This is not limited herein.

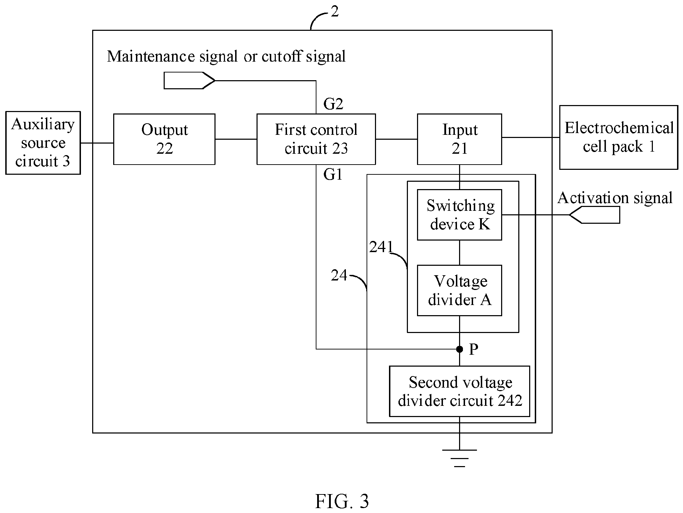

FIG. 3 is a diagram of another structure of an energy storage system according to an embodiment of this application.

Refer to FIG. 3. In this embodiment of this application, the startup circuit 2 may include a first control circuit 23 and a second control circuit 24. An input 21 of the startup circuit 2 is connected to the electrochemical cell pack 1, an output 22 of the startup circuit 2 is connected to the auxiliary source circuit 3, and the first control circuit 23 is connected between the input 21 of the startup circuit 2 and the output 22 of the startup circuit 2. The second control circuit 24 includes a first voltage divider circuit 241 and a second voltage divider circuit 242 that are connected in series, the first voltage divider circuit 241 is connected to the input 21 of the startup circuit 2, the first voltage divider circuit 241 includes a switching device K and a voltage divider A that are connected in series, the second voltage divider circuit 242 is grounded, and a connection point P between the first voltage divider circuit 241 and the second voltage divider circuit 242 is connected to a first control end G1 of the first control circuit 23. Between a ground cable and the input 21 of the startup circuit 2, the second voltage divider circuit 242 and the voltage divider A are disposed in series. When the voltage divider A is turned on, a voltage difference is generated at two ends, so that when the switching device K is turned on, the connection point P may generate a turn-on voltage V1 that is lower than a battery voltage U_{bat} of the electrochemical cell pack 1. In some embodiments of this application, the voltage divider A may be a device that can generate a turn-on voltage drop, for example, a resistor, a digital potentiometer, a voltage regulator tube, or a diode. The second voltage divider circuit 242 may be specifically a device that can generate a turn-on voltage drop, for example, a resistor, a digital potentiometer, a voltage regulator tube, or a diode.

Refer to FIG. 3. In this embodiment of this application, under control of an externally input activation signal (which may also be referred to as a startup signal), when the switching device K is turned on, the turn-on voltage V1 of the connection point P between the first voltage divider circuit 241 and the second voltage divider circuit 242 is positively correlated with the battery voltage U_{bat} of the electrochemical cell pack 1. That is, a higher battery voltage U_{bat} indicates a higher turn-on voltage V1. Specifically, the following relationship exists between the turn-on voltage V1 and the battery voltage U_{bat}: V1 = U_{bat} - U_{A}, where U_{A} is a voltage difference generated by the voltage divider A at two ends of the voltage divider A when the first voltage divider circuit is turned on, and may be briefly referred to as a turn-on voltage drop for ease of description. The turn-on voltage drop U_{A} of the voltage divider A may be adjusted. In this way, when the turn-on voltage V1 is greater than a specified threshold voltage Vth, that is, U_{bat} - U_{A} > Vth, the battery voltage U_{bat} can meet a specified startup voltage, and the first control circuit 23 turns on a line between the electrochemical cell pack 1 and the auxiliary source circuit 3, so that the battery pack 1 supplies power to the auxiliary source circuit 3, and the auxiliary source circuit 3 starts to operate. The first control circuit 23 may be a switch circuit formed through a combination of a switching transistor and another device. A specific circuit structure of the first control circuit 23 is described subsequently. The specified threshold voltage is a voltage threshold that enables a switching transistor that is in the first control circuit 23 and that is connected to the first control end G1 to be turned on, and the specified startup voltage needs to be greater than or equal to a minimum voltage of the electrochemical cell pack 1 in a case in which the energy storage system can start without relying on an external power supply.

In this embodiment of this application, the voltage divider A is disposed in the first voltage divider circuit 241 of the startup circuit 2. When the switching device K in the first voltage divider circuit 241 is turned on after receiving the startup instruction (that is, the externally input activation signal), if the battery voltage U_{bat} reaches the specified startup voltage, the turn-on voltage V1 of the connection point P between the first voltage divider circuit 241 and the second voltage divider circuit 242 is set to be greater than the specified threshold voltage. In this way, the first control circuit 23 turns on the line between the electrochemical cell pack 1 and the auxiliary source circuit 3, the battery pack 1 supplies power to the auxiliary source circuit 3, and the auxiliary source circuit 3 can start to operate. When the switching device K in the first voltage divider circuit 241 is turned on after receiving the activation signal, if the battery voltage U_{bat} is lower than the specified startup voltage, the turn-on voltage V1 of the connection point P between the first voltage divider circuit 241 and the second voltage divider circuit 242 is set to be lower than the specified threshold voltage. In this way, the first control circuit 23 maintains a disconnected state of the line between the electrochemical cell pack 1 and the auxiliary source circuit 3, and power cannot be supplied to the auxiliary source circuit 3 by using the electrochemical cell pack 1. That is, the startup circuit 2 automatically performs undervoltage protection. This effectively prevents overdischarge of the electrochemical cell pack 1, and prevents a risk that the battery pack 1 is damaged in a case of overdischarge when the battery pack 1 consumes extra power after repeatedly receiving the startup instruction during undervoltage.

Refer to FIG. 3. In this embodiment of this application, after the auxiliary source circuit 3 starts to operate, a maintenance signal may be further loaded to a second control end G2 of the first control circuit 23. A switching transistor that is in the first control circuit 23 and that is connected to the line between the electrochemical cell pack 1 and the auxiliary source circuit 3 may be connected to the second control end G2. Under control of the maintenance signal, the switching transistor may continuously turn on the line between the electrochemical cell pack 1 and the auxiliary source circuit 3, to ensure that the battery pack 1 continuously supplies power to the auxiliary source circuit 3. In addition, when the auxiliary source circuit 3 needs to stop operating, a cut-off signal may be loaded to the second control end G2 of the first control circuit 23, to control the line between the electrochemical cell pack 1 and the auxiliary source circuit 3 to be disconnected. This stops the battery pack 1 from supplying power to the auxiliary source circuit 3.

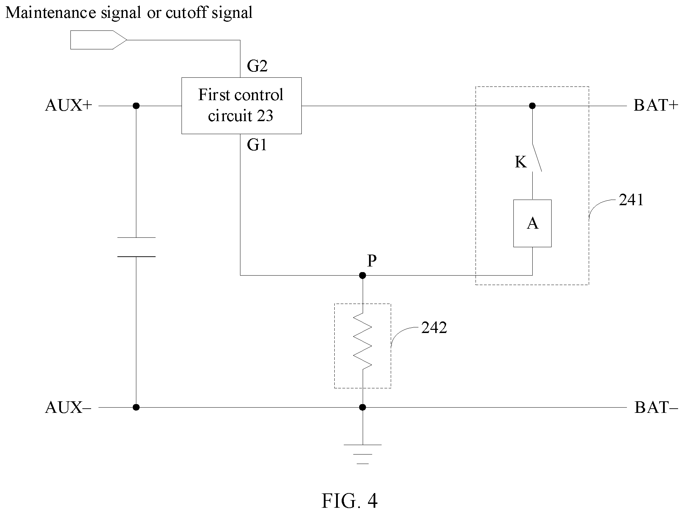

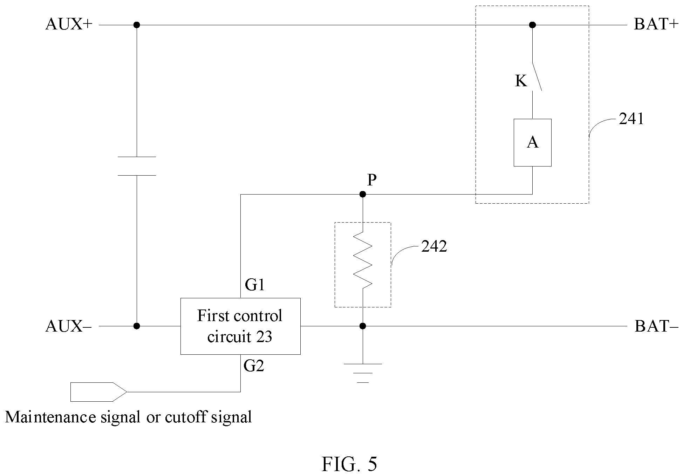

FIG. 4 is a schematic of a structure of the startup circuit in the energy storage system according to an embodiment of this application. FIG. 5 is a schematic of another structure of the startup circuit in the energy storage system according to an embodiment of this application.

Refer to FIG. 4. In some embodiments of this application, the input 21 of the startup circuit includes a positive input BAT+ and a negative input BAT-, the negative input BAT- is usually grounded, the output 22 of the startup circuit includes a positive output AUX+ and a negative output AUX-, and a capacitor is usually disposed between the positive output AUX+ and the negative output AUX-. Refer to FIG. 4. The negative output AUX- may be directly connected to the negative input BAT-, and the first control circuit 23 is connected between the positive output AUX+ and the positive input BAT+. In other words, the first control circuit 23 may be disposed on a side of the positive input BAT+, and the first control circuit 23 controls a connection status of a line between the positive input BAT+ and the positive output AUX+. Refer to FIG. 5. Alternatively, the positive output AUX+ may be directly connected to the positive input BAT+, and the first control circuit 23 may be connected between the negative output AUX- and the negative input BAT-. In other words, the first control circuit 23 may be disposed on a side of the negative input BAT-, and the first control circuit 23 controls a connection status of a line between the negative input BAT- and the negative output AUX-. The following uses an example in which the first control circuit 23 is disposed on a side of the positive input BAT+ for description.

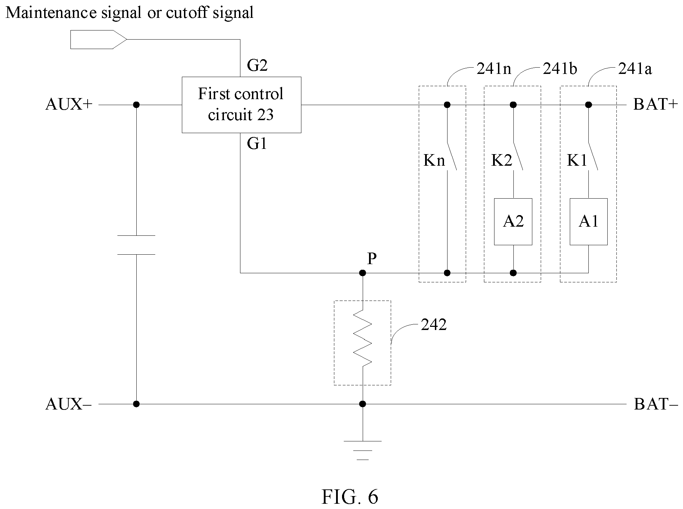

FIG. 6 is a schematic of another structure of the startup circuit in the energy storage system according to an embodiment of this application.

Refer to FIG. 6. In some embodiments of this application, the first voltage divider circuit 241 may include a plurality of voltage divider branches 241a, 241b, and 241n that are connected in parallel, each of the plurality of voltage divider branches 241a, 241b, and 241n includes one switching device K1, K2, or Kn. Different switching devices K1, K2, and Kn may be disposed for different users, and at least some of the voltage divider branches 241a and 241b include first voltage dividers A1 and A2 that are connected in series to the switching devices K1 and K2. In one voltage divider branch 241a or 241b, locations of the switching devices K1 and K2 and the first voltage dividers A1 and A2 may be interchanged. The switching devices K1, K2, and Kn included in the voltage divider branches 241a, 241b, and 241n may be of a same type or different types. Specifically, the switching devices K1, K2, and Kn may be any one of a switching transistor, a mechanical switch (for example, a physical button), a relay, or an opto-isolator. The first voltage dividers A1 and A2 included in the voltage divider branches 241a and 241b may be of a same type or different types. Specifically, the first voltage dividers A1 and A2 may be any one or a combination of a resistor, a digital potentiometer, a voltage regulator tube, or a diode. After receiving the startup instruction, any one of the switching devices K1, K2, and Kn in the voltage divider branches 241a, 241b, and 241n may enable the connection point P to generate a corresponding turn-on voltage V1. When the turn-on voltage V1 is greater than the specified threshold voltage Vth, the first control circuit 23 turns on a line between the input 21 of the startup circuit and the output 22 of the startup circuit, so that the battery pack 1 supplies power to the auxiliary source circuit 3, and the auxiliary source circuit 3 starts to operate.

In some embodiments of this application, turn-on voltage drop values of the first voltage dividers A1 and A2 included in different voltage divider branches 241a and 241b may be different. For example, the turn-on voltage drop value of the first voltage divider A1 may be greater than the turn-on voltage drop value of the first voltage divider A2, to adapt to different startup voltages. That is, for different startup modes, a corresponding minimum startup voltage may be set to implement different undervoltage protection levels.

Refer to FIG. 6. In some other embodiments of this application, the first voltage divider circuit 241 may further include a voltage divider branch 241n in which only a switching device Kn is disposed and no voltage divider A is disposed. In a case of a same battery voltage U_{bat}, the turn-on voltage V1 generated at the connection point P by the switching device Kn in the voltage divider branch 241n after the startup instruction is received is higher than the turn-on voltage V1 generated at the connection point P by the switching devices K1 and K2 in the voltage divider branches 241a and 241b after the startup instruction is received.

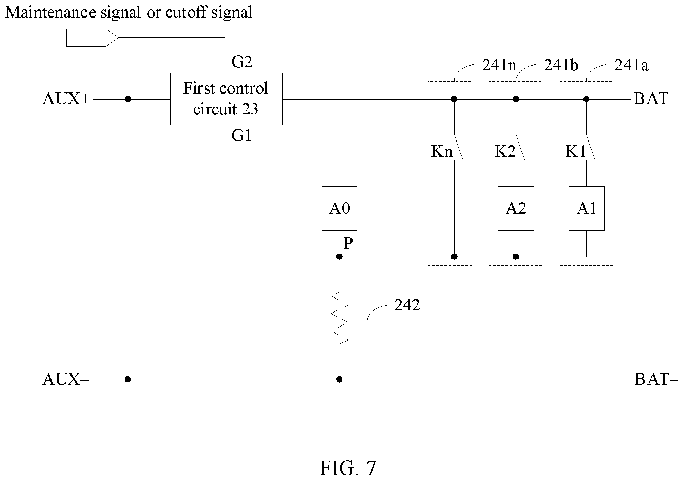

FIG. 7 is a schematic of another structure of the startup circuit in the energy storage system according to an embodiment of this application.

Refer to FIG. 7. In some embodiments of this application, the first voltage divider circuit 241 may further include a second voltage divider AC that is connected in series to the plurality of voltage divider branches 24 1a, 241b, and 241n. The second voltage divider AC may form a series connection relationship with the first voltage dividers A1 and A2 in each of the voltage divider branches 241a and 241b. In this way, it may be considered that the plurality of voltage divider branches 241a and 241b share the second voltage divider A0 for voltage division. This can reduce a quantity of voltage dividers and save costs. There may be one or more second voltage dividers A0. In addition, the second voltage divider AC may be disposed between the plurality of voltage divider branches and the connection point P, or the second voltage divider AC may be disposed between the plurality of voltage divider branches and the positive input BAT+. Specifically, the second voltage divider AC may be any one or a combination of a resistor, a digital potentiometer, a voltage regulator tube, or a diode.

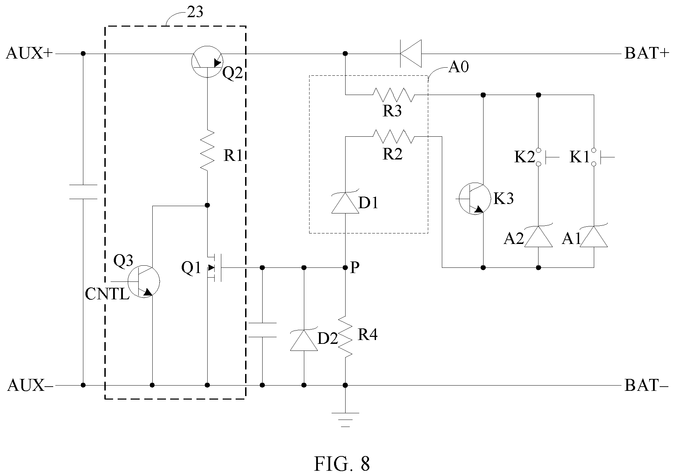

FIG. 8 is a schematic of a specific circuit structure of the startup circuit in the energy storage system according to an embodiment of this application.

For example, refer to FIG. 8. The first voltage divider circuit 241 may include three voltage divider branches that are connected in parallel. Switching devices K1 and K2 and first voltage dividers A1 and A2 are disposed on two voltage divider branches, and only a switching device K3 may be disposed on the other voltage divider branch. Specifically, both the switching devices K1 and K2 may be implemented by using mechanical switches, the switching device K3 may be implemented by using a switching transistor, and both the first voltage dividers A1 and A2 may be implemented by using voltage regulator tubes. In addition, turn-on voltage drop values of the two voltage regulator tubes may be the same or different. The second voltage divider AC may include a voltage regulator tube D1 and a resistor R2 that are connected in series between the connection point P and the three voltage divider branches, and a resistor R3 that is connected in series between the positive input BAT+ and the three voltage divider branches. The second voltage divider circuit 242 may include a resistor R4 connected in series between the negative input BAT- and the connection point P. In addition, a voltage regulator tube D2 and a filter capacitor may be further disposed between the negative input BAT- and the connection point P. FIG. 8 merely describes implementations of the first voltage divider circuit 241 and the second voltage divider circuit 242 by using an example, and is not limited thereto.

In this embodiment of this application, the first control circuit 23 has a circuit structure in which a connection status of the first control circuit 23 is controlled by using the turn-on voltage V1, and the first control circuit 23 may be specifically a switch circuit formed through a combination of a switching transistor and another device.

Refer to FIG. 8. In some embodiments of this application, the first control circuit 23 may specifically include: a first switching transistor Q1, a second switching transistor Q2, and a first resistor R1. A control electrode of the first switching transistor Q1 is connected to the connection point P between the first voltage divider circuit 241 and the second voltage divider circuit 242, a first electrode of the first switching transistor Q1 is connected to the negative input BAT-, a second electrode of the first switching transistor Q1 is connected in series to the first resistor R1 and is connected to a control electrode of the second switching transistor Q2, a first electrode of the second switching transistor Q2 is connected to the positive input BAT+, and a second electrode of the second switching transistor Q2 is connected to the positive output AUX+. When the battery voltage U_{bat} meets the specified startup voltage, the turn-on voltage V1 generated at the connection point P is greater than the specified threshold voltage Vth, so that the first electrode and the second electrode of the first switching transistor Q1 are turned on. A ground voltage of the negative input BAT- is transmitted to the control electrode of the second switching transistor Q2 after voltage division through the first resistor R1, so that the first electrode and the second electrode of the second switching transistor Q2 are turned on. In this way, after the line between the input 21 of the startup circuit and the output 22 of the startup circuit is turned on, the battery pack 1 supplies power to the auxiliary source circuit 3, and the auxiliary source circuit 3 starts to operate.

Refer to FIG. 8. In some embodiments of this application, the first control circuit 23 may further include a third switching transistor Q3. A first electrode of the third switching transistor Q3 is connected to the negative input BAT-, a second electrode of the third switching transistor Q3 is connected to the second electrode of the first switching transistor Q1, and a control electrode of the third switching transistor Q3 is configured to receive a maintenance signal CNTL. The maintenance signal CNTL may be output by a control chip after the first control circuit 23 turns on the line between the input 21 of the startup circuit and the output 22 of the startup circuit. The third switching transistor Q3 is turned on under control of the maintenance signal CNTL, so that the ground voltage of the negative input BAT-is transmitted to the control electrode of the second switching transistor Q2 after voltage division through the first resistor R1. The second switching transistor Q2 is maintained in a turn-on state, to continuously turn on the input 21 of the startup circuit and the output 22 of the startup circuit and enable the battery pack 1 to continuously supply power to the auxiliary source circuit 3.

The foregoing describes a specific circuit structure of the first control circuit 23 by using an example in which the first voltage divider circuit 241 shown in FIG. 8 includes three voltage divider branches that are connected in parallel. Alternatively, for the specific circuit structure of the first control circuit 23 described above, refer to the specific circuit structures of the first voltage divider circuit 241 shown in FIG. 4, FIG. 6, and FIG. 7.

In this embodiment of this application, the switching transistor may be a metal oxide semiconductor field effect transistor (metal oxide semiconductor field effect transistor, MOSFET), the switching transistor may be an insulated gate bipolar transistor (insulated gate bipolar transistor, IGBT) or a bipolar junction transistor (bipolar junction transistor, BJT), or the switching transistor may be one or more of a plurality of types of transistor devices such as a gallium nitride (GaN) field effect transistor and a silicon carbide (SiC) power transistor. Details are not listed in this embodiment of this application.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. An energy storage system, wherein the energy storage system comprises an electrochemical cell pack, a startup circuit, and an auxiliary source circuit, an input of the startup circuit is connected to the electrochemical cell pack, an output of the startup circuit is connected to the auxiliary source circuit, the startup circuit comprises a first control circuit and a second control circuit, and the first control circuit is connected between the input of the startup circuit and the output of the startup circuit;
the second control circuit comprises a first voltage divider circuit and a second voltage divider circuit that are connected in series, the first voltage divider circuit is connected to the input of the startup circuit, the first voltage divider circuit comprises a switching device and a voltage divider that are connected in series, the second voltage divider circuit is grounded, and a connection point between the first voltage divider circuit and the second voltage divider circuit is connected to a first control end of the first control circuit;
when the switching device is turned on, a turn-on voltage of the connection point between the first voltage divider circuit and the second voltage divider circuit is positively correlated with a battery voltage of the electrochemical cell pack; and
in response to the turn-on voltage being greater than a specified threshold voltage, the first control circuit turns on a line between the electrochemical cell pack and the auxiliary source circuit.

2. The energy storage system according to claim 1, wherein the first voltage divider circuit comprises a plurality of voltage divider branches that are connected in parallel, each of the plurality of voltage divider branches comprises one switching device, and at least some of the voltage divider branches comprise a first voltage divider that is connected in series to the switching device.

3. The energy storage system according to claim 2, wherein for the first voltage dividers comprised in different voltage divider branches, when the voltage divider branches are turned on, voltage differences generated at two ends of the first voltage dividers are different.

4. The energy storage system according to claim 2 or 3, wherein the first voltage divider circuit further comprises a second voltage divider that is connected in series to the plurality of voltage divider branches.

5. The energy storage system according to any one of claims 1 to 4, wherein the switching device is a switching transistor, a mechanical switch, a relay, or an opto-isolator.

6. The energy storage system according to any one of claims 1 to 5, wherein the second voltage divider circuit is a resistor, a digital potentiometer, a voltage regulator tube, or a diode; and
the voltage divider is a resistor, a digital potentiometer, a voltage regulator tube, or a diode.

7. The energy storage system according to any one of claims 1 to 6, wherein the input of the startup circuit comprises a positive input and a negative input, the negative input is grounded, and the output of the startup circuit comprises a positive output and a negative output; and
the negative output is connected to the negative input, and the first control circuit is connected between the positive output and the positive input; or the positive output is connected to the positive input, and the first control circuit is connected between the negative output and the negative input.

8. The energy storage system according to claim 7, wherein the first control circuit comprises: a first switching transistor, a second switching transistor, and a first resistor;
a control electrode of the first switching transistor is connected to the connection point between the first voltage divider circuit and the second voltage divider circuit, a first electrode of the first switching transistor is connected to the negative input, and a second electrode of the first switching transistor is connected in series to the first resistor and is connected to a control electrode of the second switching transistor; and
a first electrode of the second switching transistor is connected to the positive input, and a second electrode of the second switching transistor is connected to the positive output.

9. The energy storage system according to claim 8, wherein the first control circuit further comprises a third switching transistor; and
a first electrode of the third switching transistor is connected to the negative input, a second electrode of the third switching transistor is connected to the second electrode of the first switching transistor, and a control electrode of the third switching transistor is configured to receive a maintenance signal.

10. The energy storage system according to any one of claims 1 to 9, wherein the energy storage system further comprises a battery management system and a power conversion circuit, and the battery management system comprises the startup circuit and the auxiliary source circuit;
the power conversion circuit is connected to each of the auxiliary source circuit and the electrochemical cell pack; and
the auxiliary source circuit is configured to provide electric energy for the power conversion circuit, and the power conversion circuit is configured to perform power conversion on electric energy stored in the electrochemical cell pack.
